(19) Europäisches Patentamt
European Patent Office
Office européen des brevets

(11) **EP 3 179 276 B1**

(12) **FASCICULE DE BREVET EUROPEEN**

(45) Date de publication et mention
de la délivrance du brevet:
**05.07.2023  Bulletin 2023/27**

(21) Numéro de dépôt: **16203456.5**

(22) Date de dépôt: **12.12.2016**

(51) Classification Internationale des Brevets (IPC):
**G01S 19/21** *(2010.01)*    **G01S 19/24** *(2010.01)*

(52) Classification Coopérative des Brevets (CPC):
**G01S 19/21; G01S 19/243**

(54) **PROCÉDÉS ET DISPOSITIFS DE VALIDATION DE SYNCHRONISATION ENTRE UN RÉCEPTEUR DE GÉOLOCALISATION ET UN SATELLITE ÉMETTEUR**

VERFAHREN UND VORRICHTUNGEN ZUR VALIDIERUNG DER SYNCHRONISATION ZWISCHEN EINEM GEOLOKALISIERUNGSEMPFÄNGER UND EINEM SENDESATELLITEN

METHODS AND DEVICES FOR VALIDATING THE SYNCHNONIZATION BETWEEN A GEOLOCALIZING  RECEPTOR AND AN EMITTING SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.12.2015   FR 1502575**

(43) Date de publication de la demande:
**14.06.2017   Bulletin 2017/24**

(73) Titulaire: **Thales**
**92400 Courbevoie (FR)**

(72) Inventeur: **Rollet, Stéphane**
**26000 Valence (FR)**

(74) Mandataire: **Lavoix**
**2, place d'Estienne d'Orves**
**75441 Paris Cedex 09 (FR)**

(56) Documents cités:
**JP-A- H11 118 900       US-A1- 2012 134 392
US-A1- 2015 009 065**

**Description**

La présente invention concerne un procédé de validation de synchronisation entre un récepteur de géolocalisation et un satellite émetteur lors d'une phase d'acquisition d'un signal de navigation issu de ce satellite, et un récepteur de géolocalisation associé.

L'invention concerne également un procédé de validation de synchronisation entre un récepteur de géolocalisation et un satellite émetteur lors d'une phase d'acquisition d'un signal d'augmentation comprenant des données de correction et d'intégrité de géolocalisation pour un système de géolocalisation par satellite prédéterminé, et un récepteur de géolocalisation associé.

L'invention se situe dans le domaine des systèmes de géolocalisation par satellite, connus sous l'acronyme GNSS (pour « *Global Navigation Satellite System »*).

De manière générale, un système GNSS est composé d'une pluralité de satellites, ou constellation de satellites, permettant à un récepteur de géolocalisation portable de déterminer des informations de positionnement, dans un repère terrestre, également appelées informations de position, vitesse et temps (PVT).

Il existe actuellement plusieurs systèmes GNSS parmi lesquels on peut notamment citer le système GPS, le système GLONASS ou encore le système GALILEO dont la mise en service est prévue prochainement.

Les satellites d'un tel système GNSS sont aptes à émettre des signaux radioélectriques comprenant notamment des informations de navigation.

Chaque information de navigation comprend généralement des données relatives au temps d'émission par le satellite du signal correspondant et à la position courante du satellite. En particulier, les données relatives à la position courante du satellite contiennent généralement l'almanach donnant une position grossière du satellite et les éphémérides donnant la position courante exacte du satellite.

L'information de navigation est portée par une onde porteuse et modulée par un code d'étalement propre à chaque satellite. Ainsi, les signaux sont émis par les satellites en utilisant une technique d'étalement de spectre.

Le récepteur de géolocalisation appelé également récepteur GNSS, est apte à recevoir les signaux émis par les satellites et à en extraire l'information de navigation pour notamment déterminer la distance jusqu'au satellite émetteur ayant émis le signal correspondant. Cette distance, appelée également pseudo-distance, est déterminée en analysant le temps de propagation du signal correspondant.

Pour déterminer les informations de positionnement PVT, le récepteur met en oeuvre un traitement numérique des informations de navigation issues d'au moins trois satellites différents.

En pratique, pour avoir une position plus précise, le récepteur a besoin d'informations de navigation issues d'au moins quatre satellites différents.

Plus précisément, pour acquérir l'information de navigation d'un satellite donné, le récepteur met en oeuvre deux phases traitant les signaux issus de ce satellite.

Lors d'une phase initiale, appelée dans l'état de l'art, phase d'acquisition, le récepteur génère un signal local contenant notamment un code d'étalement local présentant l'image du code d'étalement du satellite.

Comme initialement le récepteur ne connait pas sa position, le signal local n'est pas synchronisé avec le signal reçu. Ceci signifie en particulier que le signal local est décalé en fréquence de porteuse du signal reçu d'une valeur appelée valeur de Doppler, et que le code d'étalement du signal reçu est retardé du code d'étalement local d'une valeur appelée valeur de retard.

Puis, le récepteur effectue une recherche d'un pic des corrélations entre le signal local et le signal reçu en essayant différentes valeurs de Doppler et de retard.

Lorsqu'un pic est détecté, le récepteur détermine les valeurs de Doppler et de retard correspondant à ce pic et à partir de ces valeurs, lance une phase suivante, appelée dans l'état de l'art, phase de poursuite.

Lors de la phase de poursuite, le récepteur met à jour régulièrement les valeurs de Doppler et de retard, et extrait l'information de navigation du signal émis par le satellite en utilisant notamment le code d'étalement local et les valeurs de Doppler et de retard déterminées.

À l'issue de la phase d'acquisition, il est considéré que le récepteur s'est synchronisé avec le satellite émetteur ou encore s'est « accroché » à ce satellite, grâce à la détection du pic de corrélation.

Il arrive parfois que le récepteur synchronise son signal local correspondant au satellite recherché sur le signal reçu d'un autre satellite, ce qui conduit à une mesure de distance erronée, et donc potentiellement à un positionnement faux.

Dans ce cas, il s'agit d'une fausse synchronisation ou d'un faux « accrochage », qu'on appelle également corrélation croisée. Dans ce cas, le calcul des informations de positionnement du récepteur est faussé.

En particulier, l'erreur de corrélation croisée se présente lorsque les satellites émettent des signaux GNSS à code périodique court, par exemple les signaux GPS L1 C/A (acronyme de « coarse acquisition), correspondant à une fréquence de 1 575,42 MHz, SBAS L1 C/A et GALILEO L1 BC.

Un phénomène analogue se présente également lorsque le signal reçu provient d'un satellite émetteur d'informations de correction de position, dans un système d'augmentation spatiale, appelé système SBAS.

Il existe dans l'état de l'art différentes méthodes permettant d'éviter une telle fausse synchronisation ou corrélation croisée.

Les documents US2015/009065 A1, US2012/134392 A1 et JP H11 118900 A décrivent des méthodes de détection de corrélation croisée.

Une méthode, utilisée de manière conventionnelle, consiste à vérifier la cohérence entre la position du satellite calculée à partir des éphémérides contenues dans l'information de navigation et celle calculée à partir des almanachs décodés. Les almanachs contiennent les identifiants de l'ensemble des satellites émetteurs de la constellation, contrairement aux éphémérides. L'incohérence entre ces valeurs signifie donc une fausse synchronisation.

En effet, les données d'éphémérides d'un satellite permettent d'estimer avec une précision de quelques mètres la position de ce satellite, mais ne sont transmises que par le satellite lui-même et ont une durée de validité limitée à quelques heures.

Les données d'almanachs pour l'ensemble de la constellation de satellites permettent d'estimer la position de chacun des satellites grossièrement, à quelques centaines de kilomètres près, mais sont transmises par l'ensemble des satellites de la constellation et ont une durée de validité de plusieurs jours.

Ainsi, si la différence entre la position calculée à partir des éphémérides et la position calculée à partir des almanachs est supérieure à la distance moyenne entre satellites émetteurs, on estime qu'il y a une erreur, donc une corrélation croisée.

Afin d'éviter une fausse détection de corrélation croisée et de garantir l'intégrité des informations de positionnement calculées par un récepteur GNSS, le standard aéronautique RTCA (« Radio Technical Commission for Aeronautics) DO-229 « Minimum Operational Performance Standards for Global Positionning System » impose un décodage complet de l'ensembles des données d'éphémérides reçues deux fois et une comparaison avec les données d'almanach décodées pour l'ensemble des satellites.

Pour un satellite émetteur donné, un ensemble complet de données d'éphéméride est formé d'un nombre donné de mots d'éphéméride, chacun ayant un rang associé et codant des informations relatives au satellite émetteur, ces informations permettant de calculer la position du satellite émetteur. Les données d'éphémérides sont retransmises périodiquement, et renouvelées à une fréquence donnée, par exemple toutes les deux heures pour les satellites GPS.

Les mots d'éphémérides sont transmis dans des sous-trames du signal émis, la transmission de la totalité des mots d'une éphéméride nécessitant une pluralité de sous-trames.

Ainsi, la méthode classique de validation d'absence de corrélation croisée prend un temps relativement long, qui est de 48 secondes à 60 secondes pour le système GPS et de plusieurs minutes pour le système SBAS.

La présente invention a pour but de remédier à cet inconvénient.

A cet effet, selon un premier aspect, l'invention propose un procédé de validation de synchronisation entre un récepteur de géolocalisation avec un satellite émetteur lors d'une phase d'acquisition d'un signal de navigation issu de ce satellite selon la revendication 1.

Avantageusement, l'invention permet de valider la synchronisation du récepteur avec un satellite émetteur à partir d'une partie des mots d'éphémérides reçus uniquement, et par conséquent de réduire considérablement le temps de confirmation d'absence ou de présence de fausse synchronisation.

Le procédé de validation de synchronisation selon l'invention peut également présenter une ou plusieurs des caractéristiques des revendications dépendantes 2 à 8, prises indépendamment ou en combinaison selon toutes les combinaisons techniquement possibles.

Selon un autre aspect, l'invention concerne un récepteur de géolocalisation mettant en oeuvre une synchronisation avec un satellite émetteur lors d'une phase d'acquisition d'un signal de navigation issu de ce satellite selon la revendication 9.

D'autres caractéristiques et avantages de l'invention ressortiront de la description qui en est donnée ci-dessous, à titre indicatif et nullement limitatif, en référence aux figures annexées, parmi lesquelles :

- la figure 1 est une illustration schématique d'un système de géolocalisation ;
- la figure 2 est un synoptique des principales étapes d'un procédé de validation de synchronisation selon un premier mode réalisation de l'invention ;
- la figure 3 est un synoptique des principales étapes d'un procédé de validation de synchronisation selon un deuxième mode réalisation de l'invention ;
- la figure 4 est un synoptique des principales étapes d'un procédé de validation de synchronisation selon un troisième mode réalisation de l'invention.

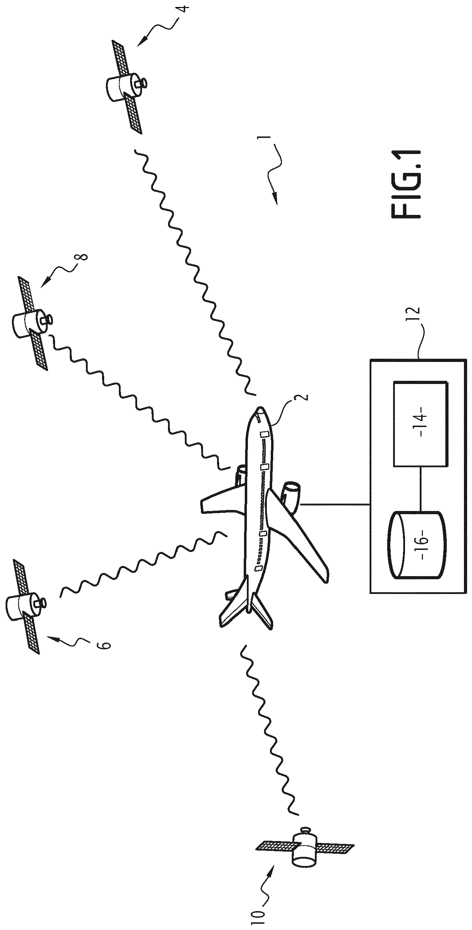

La figure 1 illustre un système de géolocalisation 1 adapté à mettre en oeuvre l'invention, dans le contexte de l'aide à la navigation d'un porteur mobile 2, qui est dans l'exemple de la figure 1 un aéronef.

Bien entendu, l'invention ne se limite pas à ce mode de réalisation, et s'applique plus généralement pour la géolocalisation de tout porteur mobile.

Le porteur mobile 2 est équipé d'un récepteur de géolocalisation 12, ou récepteur GNSS, apte à recevoir des signaux radioélectriques de navigation en provenance d'une pluralité de satellites émetteurs 4, 6, 8, faisant partie d'une constellation de satellites d'un système de géolocalisation GNSS.

Dans un premier mode de réalisation, il s'agit d'une constellation de satellites du système GPS.

En variante, il s'agit d'une constellation de satellites du système GALILEO, ou de tout autre système GNSS.

De manière générale, le porteur mobile 2 est apte à recevoir des signaux radioélectriques en provenance d'un système de géolocalisation GNSS, susceptible d'émettre dans des bandes de fréquences prédéfinies.

Chacun des satellites transmet des signaux de radionavigation, comprenant également des données d'éphéméride constituées d'une pluralité de mots d'éphéméride, permettant de calculer une position du satellite émetteur dans un référentiel terrestre donné, avec une précision donnée, par exemple une précision de quelques mètres. De plus, les données d'éphéméride contiennent des informations sur l'horloge interne du satellite émetteur.

De manière connue, les satellites sont susceptibles d'émettre des signaux sur plusieurs fréquences d'émission, les signaux émis ayant un code périodique associé.

Par exemple, dans le cas du système GPS, les signaux GPS L1 C/A sont émis à une fréquence de 1 575,42 MHz avec un code périodique d'étalement de 1023 éléments. Les codes C/A sont accessibles à tous et largement utilisés dans les applications de radionavigation.

Ces satellites sont également susceptibles d'émettre sur d'autres fréquences, par exemple 1 227,60 MHz (signaux L2) ou 1176.45 MHz (signaux L5).

Notamment, des données d'éphémérides peuvent être émises dans des signaux L5, avec un code périodique de 10230 éléments, permettant une bien plus grande immunité aux corrélations croisées que les signaux L1.

De plus, en variante, des données de correction et d'intégrité d'un ou plusieurs satellites 10 d'une constellation de satellites géostationnaires, selon le système d'augmentation de précision spatiale utilisant des satellites géostationnaires, appelé SBAS (pour « satellite-based augmentation system »), qui sont également transmises dans ces signaux radioélectriques émis dans les mêmes bandes de fréquence prédéfinies.

Le récepteur 12 comporte plusieurs canaux de réception pour la réception de signaux d'augmentation de précision spatiale en provenance de plusieurs satellites.

Le récepteur GNSS 12 comporte notamment un dispositif de calcul, comportant un ou plusieurs processeurs de calcul 14, aptes à exécuter des calculs et des instructions de code de programme d'ordinateurs lorsqu'ils sont mis sous tension. Le dispositif de calcul comprend également une ou des mémoires de stockage 16, aptes à stocker des instructions de code exécutable permettant la mise en oeuvre de programmes comportant des instructions de code aptes à mettre en oeuvre les procédés selon l'invention.

Dans un mode de réalisation, le dispositif de calcul est un ordinateur.

En variante, le dispositif de calcul est un dispositif électronique de type circuit logique programmable, par exemple une ou plusieurs des cartes électroniques à base de FPGA ou ASIC.

Notamment, des données d'almanachs et des données d'éphémérides relatives à chacun des satellites 4, 6, 8, 10 considérés sont mémorisées dans la mémoire 16.

Le processeur de calcul 14 met en oeuvre des modules de mise en oeuvre d'un test de validation de synchronisation pour chaque satellite émetteur identifié, non représentés sur la figure, comprenant :

- un module d'extraction de mots d'éphéméride du signal de navigation associé au satellite identifié dans la phase d'acquisition, au fur et à mesure de la réception dudit signal de navigation,
- un module de comparaison d'au moins une partie desdits mots d'éphéméride extraits à au moins un mot d'éphéméride de même rang mémorisé pour ledit satellite identifié et/ou pour au moins un autre des satellites émetteurs, et
- un module de validation ou non de la synchronisation avec ledit satellite émetteur identifié, en fonction du résultat de la comparaison, dès que les comparaisons effectuées permettent d'atteindre une probabilité de fausse alarme et/ou une probabilité de non-détection prédéterminée.

En outre, le processeur de calcul 14 met en oeuvre des modules de mise en oeuvre d'un test de validation pour chaque satellite 10 émetteur d'un signal d'augmentation comprenant des données de correction et d'intégrité de géolocalisation, comprenant :

- un module d'extraction de mots reçus du signal d'augmentation associé au satellite identifié dans la phase d'acquisition, au fur et à mesure de la réception dudit signal,
- un module de comparaison d'un mot reçu à au moins un mot reçu de même type reçu pour au moins un autre des satellites émetteurs,

et, un module de validation ou non de la synchronisation avec ledit satellite émetteur identifié, en fonction du résultat de la comparaison, dès que les comparaisons effectuées permettent d'atteindre une probabilité de fausse alarme et/ou une probabilité de non-détection prédéterminée.

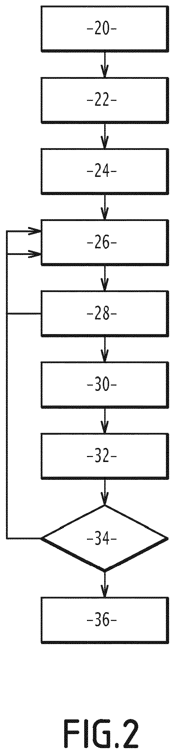

La figure 2 est un synoptique des principales étapes d'un procédé de validation de synchronisation selon un premier mode de réalisation de l'invention, mis en oeuvre par un récepteur GNSS 12.

Ce premier mode de réalisation s'applique en particulier avec le système GPS, dans le cadre d'une ré-acquisition de signal de navigation pour un satellite Si donné de la constellation, après une perte ou un masquage du signal de navigation préalablement acquis, sur un canal associé.

On suppose dans ce mode de réalisation qu'on dispose d'éphémérides contrôlées et mémorisées dans la mémoire 16 pour le satellite Si, ou, en d'autres termes, d'éphémérides valides et non obsolètes.

Une éphéméride est constituée de données ou mots d'éphéméride, chaque mot d'éphéméride ayant un rang associé. Par exemple, dans un système GPS, il y a 20 mots d'éphéméride définis, de rangs (ou indices) allant de 1 à 20. On note m(i) le mot d'éphéméride de rang i. Le mot d'éphéméride m(i) transmis par un satellite donné à un instant donné a une valeur associée.

Les signaux GPS sont émis périodiquement et sont constitués de pages, chaque page étant constituée de sous-trames, chaque sous-trame étant constituée d'un nombre donné de mots, chaque mot étant codé sur un nombre donné de bits, émis à une fréquence donnée. Les mots sont protégés par un code de protection ou code de détection d'erreur, par exemple une parité, permettant de détecter facilement d'éventuelles pertes ou erreur au niveau de la transmission.

Les mots d'éphéméride de rangs donnés sont répartis dans diverses sous-trames des signaux GPS.

Dans ce premier mode de réalisation, le procédé comporte une première étape préalable 20 d'obtention d'une valeur de probabilité de non-détection $P_{nd}$, paramètre défini par un opérateur ou en fonction de contraintes de sécurité d'une application visée.

Ensuite on met en oeuvre une étape 22 d'obtention et de mémorisation de probabilités pour qu'à un instant donné, un mot d'éphéméride de même rang soit identique pour deux satellites Si et Sj distincts.

Soit X(i) l'événement associé au fait que le mot m(i) soit identique dans les éphémérides transmises par deux ou plus de satellites distincts.

On dénombre autant d'événements X(i) que de mots d'éphémérides distincts.

Dans l'étape préalable 20, on récupère une estimation de la probabilité $P(X(i))$ de chaque événement X(i), ainsi que de l'ensemble des probabilités $P\left(\bigcap_{i \in A} X(i)\right)$ , $A \in \Omega_{GPS,Pnd}$ , les événements X(i) n'étant pas indépendants.

De préférence, cette estimation est effectuée à partir de bases de données archivant les éphémérides existantes pour la constellation considérée.

Le calcul des probabilités est fait de préférence par un ordinateur autre que le récepteur de géolocalisation 12, et les valeurs des probabilités calculées sont fournies au récepteur et mémorisées par celui-ci.

L'estimation a priori des probabilités peut être refaite à tout moment pour prendre en compte toute évolution du système GNSS considéré.

Pour le système GPS, dont l'éphéméride est constituée de 20 mots distincts, des calculs sur un long historique d'éphémérides mémorisées ont montré que les probabilités des événements X(i) sont différentes pour des mots d'éphémérides différents.

De plus, on estime a priori, par estimation des probabilités conjointes, l'ensemble $\Omega_{Pnd}$ des ensembles A de mots d'éphémérides, désignés par leurs rangs respectifs, pour le système GNSS considéré, permettant d'assurer avec une probabilité de non détection $P_{nd}$ de valeur donnée, que ces mots ne peuvent pas provenir de multiples satellites.

Mathématiquement on écrit :

$$\Omega_{Pnd} = \left\{ A \,/\, A \subseteq \{1,...,N\}, \; P\left(\bigcap_{i \in A} X(i)\right) < P_{nd} \right\} \text{ (Eq 1)}$$

Par exemple, les probabilités estimées sont les suivantes pour les deux premiers mots d'éphémérides, m(1) et m(2) : $P(X(1)) = 2,8 \times 10^{-2}$ et $P(X(3)) = 8,2 \times 10^{-3}$, et pour l'ensemble $A = \{1,3\}$ la probabilité estimée est de

$$P(\bigcap_{i \in A} X(i)) = 9,5 \times 10^{-4}$$

Les étapes 20 et 22 sont répétées, le cas échéant, pour plusieurs probabilités de non-détection $P_{nd}$ données.

Pour chacune des valeurs de $P_{nd}$ données, les ensembles A de rangs de mots d'éphémérides sont mémorisés, par exemple sous forme de tables ou toute autre forme adaptée.

Il est à noter que les ensembles d'indices A déterminés pour une probabilité de non-détection donné ont des cardinaux différents en fonction de probabilités P(x(i)) estimées, la probabilité de non-détection dépendant également des rangs des indices reçus. Ainsi, par exemple pour le système GPS et une probabilité de non-détection de $10^{-4}$, des ensembles de un, deux ou trois mots d'éphémérides forment l'ensemble

$$\Omega_{Pnd} = \left\{ A \,/\, A \subseteq \{1,...,N\}, \; P\!\left(\bigcap_{l \in A} X(i)\right) < P_{nd} \right\}.$$

Pour chaque satellite Si considéré, des valeurs de mots d'éphémérides contrôlés et validés sont mémorisés lors de l'étape 24.

Dans un mode de réalisation, les valeurs sont reçues par le récepteur via un autre canal de communication, par exemple par une communication radio GSM ou par une communication via le réseau Internet.

En variante, des valeurs de mots d'éphémérides mémorisées ont été reçues préalablement du satellite émetteur Si et validées par une méthode de validation classique, par exemple la méthode de validation par rapport aux données d'almanachs préalablement mémorisées.

Selon une autre variante, des valeurs de mots d'éphémérides mémorisées ont été transmises par le satellite Si par une autre fréquence que le signal de radionavigation à traiter, par exemple par les signaux L5, pour lesquels le risque de corrélation croisée est très faible.

On note les mots d'éphémérides mémorisés pour un satellite Si : $M_i^{\,m}(k), k \in \{1,...,N\}$ , k indiquant le rang correspondant, i l'indice du satellite associé et N étant le nombre de mots d'éphémérides du système GNSS, par exemple N=20 pour le GPS.

Lors d'une étape 26, un signal de navigation Sig est reçu sur le canal considéré, et des mots d'éphémérides associés sont extraits de ce signal.

Le signal Sig est considéré comme étant reçu d'un satellite émetteur Sj suite à la phase d'acquisition de signal comportant une synchronisation par corrélation.

On appelle ces mots d'éphémérides mots reçus, et ils sont notés : $M_j^{\,r}(k), k \in \{1,...,N\}$ .

Le procédé a pour objectif de valider ou non la synchronisation avec le signal Sj, en d'autres termes de valider, avec une probabilité de non-détection associée, si les éphémérides reçues avec le signal Sig sont émises par le signal Sj ou si elles sont susceptibles d'être émises par un autre satellite Si de la constellation.

Pour ce faire, l'étape 26 de réception et d'extraction de mots d'éphémérides reçus est suivie d'une étape 28 de vérification de la parité de chaque mot d'éphéméride reçu.

En effet, comme expliqué ci-dessus, il s'agit d'un mécanisme de protection ayant pour objectif de détecter d'éventuelles erreurs de transmission et donc d'éviter l'utilisation de mots d'éphémérides erronés.

Plus généralement, une vérification du code de protection du mot reçu est appliquée.

En cas de vérification négative, l'étape 28 est suivie de l'étape 26 précitée.

En cas de vérification positive, l'étape 28 est suivie d'une étape 30 de comparaison de chacun des mots d'éphéméride reçus extraits $M_j^{\,r}(k)$ avec le mot d'éphéméride de même rang mémorisé $M_j^{\,m}(k)$ , pour le satellite Sj identifié préalablement dans l'étape d'acquisition de signal de navigation.

Il est à noter que les mots d'éphémérides reçus sont extraits des sous-trames reçues au fur et à mesure et traités, ce qui a pour objet de diminuer le temps total de validation de la synchronisation avec le satellite Sj.

Ainsi, un sous-ensemble de mots d'éphéméride reçus est traité à l'étape 28, ce sous-ensemble pouvant être limité à un seul mot d'éphéméride.

Si $M_j^{\,r}(k) = M_j^{\,m}(k)$ , la valeur du mot reçu est bien égale à la valeur du mot mémorisé de même rang k, pour le satellite Sj. Comme expliqué ci-dessus, on dispose dans ce cas d'une estimation de la probabilité pour que le mot d'éphéméride reçu $M_j^{\,r}(k)$ provienne d'un autre satellite que le satellite Sj.

Le résultat de la comparaison est mémorisé et cumulé avec les résultats précédents à l'étape de traitement 32.

Dans un mode de réalisation de l'étape de traitement 32, on mémorise le rang k du mot d'éphéméride reçu et validé par la comparaison, et on vérifie si k appartient à un des ensembles A de rangs de mots d'éphémérides mémorisés pour atteindre la probabilité de non-détection $P_{nd}$ donnée.

La probabilité de non-détection $P_{nd}$ est un paramètre qui est par exemple renseigné par un opérateur et fourni en entrée du procédé ou qui est imposé par une application utilisant le récepteur de géolocalisation.

Par exemple, $P_{nd}$ est de $10^{-3}$ ou de $10^{-4}$ pour des applications usuelles.

A l'étape 34 suivant l'étape 32 on vérifie si un des ensembles A de rangs de mots d'éphémérides a été complété, en d'autres termes si on a reçu et validé par comparaison avec les mots d'éphémérides mémorisés tous les mots d'un ensemble A, assurant ainsi que ces mots sont envoyés par le satellite émetteur Sj considéré avec une probabilité de non-détection inférieure à $P_{nd}$.

En cas de réponse positive, la validation de la synchronisation avec le satellite émetteur Sj est validée pour le signal de navigation Sig reçu. L'algorithme prend fin (étape 36).En cas de réponse négative, l'étape 34 est suivie de l'étape 26 de réception est d'extraction de mots d'éphéméride précédemment décrite.

En cas de réponse négative, lorsque tous les mots de l'éphéméride GPS sont reçus, le récepteur compare les éphémérides décodés aux almanachs pour s'assurer de la présence ou non de corrélation croisée.

Ainsi, dans le cas général d'absence de corrélation croisée et d'absence de changement des éphémérides pendant le coupure de réception du signal, la validation de la synchronisation est très rapide. Dans les cas particuliers, de faible occurrence, de changement d'éphéméride pendant la coupure ou de corrélation croisée, la vérification de tous les mots de l'éphéméride GPS est effectuée.

Avantageusement, si les premiers mots d'éphéméride reçus et traités lors de l'application de ce premier moment de réalisation sont validés et suffisamment distinctifs en termes de probabilités, la validation de la synchronisation est très rapide.

Par exemple, avec une probabilité de non-détection $P_{nd}=10^{-4}$, la validation de synchronisation, ou confirmation d'absence de corrélation croisée, prend 0,6 secondes dans le cas le plus favorable, dans lequel le premier mot d'éphéméride reçu et traité est distinctif, et peut prendre jusqu'à maximum 17,4 secondes.

En tous cas, la validation est bien plus rapide que lorsqu'on applique la validation classique et systématique.

Il est à noter que ce premier mode de réalisation décrit ci-dessus s'applique pour d'autres constellations de satellites que la constellation GPS, à condition de disposer de données suffisantes pour obtenir une estimation des probabilités des événements X(i) a priori.

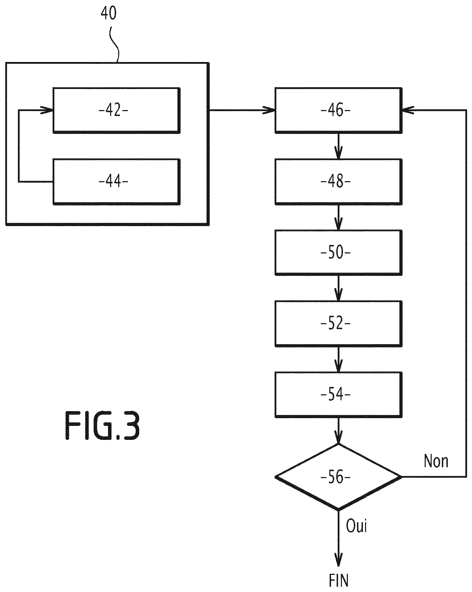

Un deuxième mode de réalisation du procédé de validation de synchronisation avec un satellite émetteur Sj, mis en oeuvre par un récepteur GNSS 12, est décrit en référence à la figure 3.

Ce deuxième mode de réalisation diffère du premier mode de réalisation car il ne nécessite pas d'estimation a priori des probabilités que deux mots d'éphémérides transmis en même temps par deux satellites émetteurs distincts soient identiques.

De manière connue, le récepteur GNSS reçoit et traite simultanément plusieurs canaux de réception, chaque canal de réception étant associé à un satellite émetteur lors de la phase d'acquisition des signaux de navigation.

Dans ce deuxième mode de réalisation, on suppose que le signal de navigation Sig traité est un signal suffisamment fort pour générer une corrélation croisée sur un canal de réception courant, et qu'il est également reçu en phase d'acquisition sur un autre canal du récepteur GNSS.

Dans ce deuxième mode de réalisation, une première étape 40 est mise en oeuvre sur tous les canaux de réception, pour extraire et mémoriser les mots d'éphémérides reçus, chaque canal étant associé à un satellite d'émission.

Cette étape est mise en oeuvre suite à l'acquisition préalable de signal de navigation pour chaque canal et comporte, pour chaque canal de réception, une première sous-étape 42 d'extraction et de vérification de la parité de chaque mot d'éphéméride reçu et une sous étape 44 de mémorisation des mots d'éphéméride dont la parité a été vérifiée, en relation avec le canal de réception traité.

Ainsi, pour chaque canal de réception associé à un satellite émetteur d'indice I, $I \in \{1,..., N_C\}$ où Nc désigne le nombre de canaux de réception, on mémorise des mots d'éphéméride : $M_l^m(k), k \in \{1,..., N\}$ où N est le nombre de mots d'éphéméride (égal à 20 pour le système GPS), et pour lesquels la parité a été vérifiée, afin d'éviter l'utilisation ultérieure de mots d'éphéméride erronés.

Sensiblement en parallèle, et au fur et à mesure de la réception, lorsque l'étape 44 est mise en oeuvre pour un canal traité donné, appelé canal courant, associé à un satellite émetteur Si, dit satellite courant, pour lequel on met en oeuvre la validation de synchronisation, on obtient le mot reçu dont la parité a été vérifiée $M_i^r(p)$ à l'étape 46.

On extrait ensuite d'un ensemble de mots d'éphéméride mémorisés associés au satellite émetteur Si le mot de rang correspondant à l'étape 48, noté $M_i^m(p)$.

Les mots d'éphéméride $M_i^r(p)$ et $M_i^m(p)$ sont comparés à l'étape 50.

De plus, le mot d'éphéméride reçu $M_i^r(p)$ est comparé, lors de l'étape de comparaison 50, à tous les mots d'éphémérides de même rang et validés reçus sur les autres canaux de réception, notés $M_j^r(p), j \neq i$ .

Les résultats de la comparaison sont traités lors d'une étape de traitement 52.

Si les mots d'éphéméride $M_i^r(p)$ et $M_i^m(p)$ sont identiques, et que le mot d'éphéméride $M_i^r(p)$ est différent de tous les mots reçus de même rang $M_j^r(p), j \neq i$ , sur un canal de réception différent, alors la synchronisation est validée pour ce mot, donc considérée comme non entachée de corrélation croisée.

Un compteur de validité, $C_{valid}$ est incrémenté à l'étape 54, ce compteur étant initialisé 0 à chaque nouvelle mise en oeuvre du procédé de validation de synchronisation.

Si les mots d'éphéméride $M_i^r(p)$ et $M_i^m(p)$ sont différents, et que le mot d'éphéméride $M_i^r(p)$ a la même valeur qu'un ou plusieurs des mots reçus de même rang $M_j^r(p), j \neq i$ , sur un canal de réception différent, alors la synchronisation est invalidée pour ce mot, donc considérée comme entachée de corrélation croisée.

Un compteur d'invalidité, $C_{invalid}$, est incrémenté à l'étape 54, ce compteur étant initialisé 0 à chaque nouvelle mise en oeuvre du procédé de validation de synchronisation.

Il est à noter que les compteurs de validité $C_{valid}$ et d'invalidité $C_{invalid}$ ne sont incrémentés que pour des mots de rangs distincts. Ainsi, un mot de même rang reçu à nouveau ne peut pas contribuer à incrémenter un compteur non nul.

Il est ensuite vérifié à une étape 56 si le compteur de validité ou, le cas échéant, le compteur d'invalidité, a atteint un nombre de mots d'éphéméride à prendre en considération Nt.

Ce nombre Nt dépend des valeurs de la probabilité de non-détection $P_{nd}$ et de la probabilité de fausse alarme $P_{fa}$ d'une corrélation croisée.

Lorsque le nombre Nt est atteint, le procédé de validation de synchronisation pour le signal de navigation reçu sur le canal courant prend fin.

Si le nombre Nt n'est pas atteint, l'étape 56 est suivie de l'étape 46 précédemment décrite pour traitement d'un mot d'éphéméride suivant pour le canal associé au satellite émetteur Si.

Si la validation de la synchronisation est négative, avantageusement, la ré-acquisition de la synchronisation peut être relancée sans attendre, ce qui permet d'améliorer la radionavigation.

Le nombre Nt de mots d'éphémérides à prendre en compte est, dans un mode de réalisation, égal à 1.

Pour un mot d'éphéméride reçu donné, on peut calculer la probabilité de non-détection et la probabilité de fausse alarme associées.

En ce qui concerne la probabilité de non-détection, il y a un risque de non détection si un mot est mal décodé. La probabilité de non-détection due à une telle erreur est dépendante du taux d'erreur mot, également appelé WER pour « word error rate », qui dépend du rapport signal à bruit du signal reçu, faussement considéré valide.

Pour un mot GPS codé sur 24 bits et protégé par 6 bits de parité, on a : $P_{nd} < WER \times 2^{-6} \times 2^{-24}$, où $2^{-6}$ est la probabilité d'erreur pour un mot protégé par 6 bits de parité et $2^{-24}$ est la probabilité que le mot reçu soit égal à un mot reçu pour un autre satellite.

La probabilité de fausse alarme, qui est la probabilité de fausse détection d'un phénomène de corrélation croisée, est calculée, selon un mode de réalisation, par rapport au renouvellement des éphémérides envoyées par rapport aux éphémérides mémorisées par un même satellite, renouvellement qui est effectué avec une fréquence donnée, par exemple de 2 heures.

Le nombre Nt de mots d'éphéméride à prendre en considération est déterminé différemment selon le fait que le traitement sache que les éphémérides envoyées ont changé ou non par rapport aux éphémérides mémorisées. L'un des mots d'éphéméride permet de le dater. S'il est reçu et égal de celui de l'éphéméride mémorisée, Nt sera déterminé sur une hypothèse d'absence de changement, s'il n'est pas encore reçu ou s'il est reçu différent de celui de l'éphéméride mémorisé, Nt sera déterminé sur une hypothèse de changement.

En effet, si les éphémérides envoyées n'ont pas changé par rapport aux éphémérides mémorisées pour un satellite émetteur donné, la probabilité de fausse alarme est calculée en fonction de la probabilité d'erreur de décodage WER, d'erreur de parité ($2^{-6}$) et d'égalité du mot décodé par rapport à l'un des mots de même rang décodé sur l'un des autres satellites $(1-(1-2^{-24})^{N_c-1})$.

Si le récepteur reçoit Nc satellites, on a :

$$P_{fa} < WER \times 2^{-6} \times \left(1 - (1 - 2^{-24})^{N_c-1}\right) \text{ (Eq 2)}$$

Pour Nc=10, on a une probabilité de fausse alarme largement inférieure à $10^{-8}$.

Si les éphémérides envoyées ont changé par rapport aux éphémérides mémorisées pour un satellite émetteur donné, le risque de fausse alarme est supérieur.

Soit Y(i) l'événement associé au fait que les mots $m(i)$ de deux tables d'éphémérides émises successivement par un même satellite soient identiques.

On a alors :

$$P_{fa} = P\left(\bigcap_{i \in A} Y(i)\right)\left(1 - \left(1 - P\left(\bigcap_{i \in A} X(i)\right)\right)^{N_c}\right) \approx N_c \cdot P\left(\bigcap_{i \in A} Y(i)\right) \cdot P\left(\bigcap_{i \in A} X(i)\right) \qquad \text{(Eq 3)}$$

A étant l'ensemble des rangs (ou indices) des mots d'éphémérides reçus vérifiant le critère d'invalidation, et Nc le nombre de satellites émetteurs reçus.

Par exemple, si on souhaite une probabilité de fausse alarme $P_{fa} < 10^{-3}$, et que Nc=10, on utilise les ensembles d'indices A qui fournissent une estimation a priori de probabilité associée de $10^{-4}$, comme expliqué ci-dessus par rapport au premier mode de réalisation.

Les probabilités des événements Y(i) sont estimées a priori, sur un autre calculateur, uniquement pour déterminer la valeur Nt mémorisée par le récepteur en fonction de Nc. La détermination des probabilités $P\left(\bigcap_{i \in A} Y(i)\right)$ se fait de la même manière que pour déterminer les probabilités $P\left(\bigcap_{i \in A} X(i)\right)$ : cette estimation est effectuée à partir de bases de données archivant les éphémérides existantes pour la constellation considérée.

Comme dans le premier mode de réalisation décrit ci-dessus, on peut utiliser des estimations a priori des probabilités.

Il est à noter que dans ce cas de figure, le nombre Nt de mots d'éphéméride à prendre en considération pour une probabilité de fausse alarme donnée dépend également des rangs des indices reçus, des ensembles de un, deux ou trois mots d'éphémérides, faisant partie de l'ensemble défini e à l'équation (Eq 1) ci-dessus :

$$\Omega_{Pnd} = \left\{ A \, / \, A \subseteq \{1,...,N\}, \ P\left(\bigcap_{i \in A} X(i)\right) < P_{nd} \right\}.$$

En variante, si on ne dispose pas d'une estimation a priori des probabilités, il suffit, lors du renouvellement des éphémérides envoyées par un satellite, de considérer l'ensemble des mots d'éphéméride reçus. Dans cette variante, aucune estimation a priori de probabilité n'est nécessaire.

Le procédé proposé ci-dessus s'applique néanmoins et permet d'accélérer considérablement la validation de la synchronisation pendant toute la phase de fonctionnement avec un même ensemble de données d'éphémérides.

Le procédé proposé dans ce deuxième mode de réalisation ci-dessus s'applique de manière analogue pour les signaux de radionavigation GALILEO L1 BC.

Les signaux GALILEO L1 BC ont un code périodique de 4092 éléments, mais ne permettent cependant pas suffisamment de robustesse pour garantir l'absence de corrélations croisées.

Le procédé décrit ci-dessus s'applique avec les données d'éphéméride du système GALILEO, en tenant compte de l'agencement spécifique des messages de navigation I/NAV et du code de protection qui est un code CRC (pour « contrôle de redondance cyclique »), appliqué sur un pluralité de mots d'éphémérides transmis.

Il est à noter que le mot d'éphéméride de rang 4 dans le système GALILEO porte l'identifiant du satellite émetteur, donc un décodage sans erreur de ce mot d'éphéméride permet d'identifier le satellite émetteur.

Cependant, les mots d'éphémérides sont transmis de manière cyclique, donc, il est possible d'avoir à attendre un temps pouvant aller jusqu'à 30 secondes pour décoder le mot d'éphéméride de rang 4.

Si une validation de synchronisation plus rapide est souhaitée, le procédé de l'invention décrit ci-dessus s'applique, et en particulier le deuxième mode de réalisation qui ne nécessite pas de calcul a priori de probabilités associées aux mots d'éphémérides émis par les différents satellites de la constellation.

Les calculs de probabilité de non-détection $P_{nd}$ et de fausse alarme $P_{fa}$ sont adaptés au cas de figure du système GALILEO.

Par exemple, pour un mot d'éphéméride protégé par un code CRC de 24 bits, et codé sur 110 bits on a :

$$P_{nd} < WER \times 2^{-24} \times 2^{-110} << 4 \cdot 10^{-41}$$

Avantageusement, l'utilisation d'un seul mot d'éphéméride pour valider ou invalider la présence d'une corrélation croisée apporte un fort niveau d'intégrité, ce qui limite le temps de validation de 2 secondes minimum à 18 secondes maximum.

Selon un troisième mode de réalisation, l'invention s'applique également pour le cas des signaux d'augmentation, par exemple SBAS, comprenant des données de correction et d'intégrité de géolocalisation pour un système de géolocalisation par satellite prédéterminé, dans le cas des récepteurs adaptés à recevoir plusieurs signaux SBAS sur plusieurs canaux de réception, et donc sont susceptibles de subir le phénomène de synchronisation erronée sur un satellite SBAS émetteur, due à une corrélation croisée.

Chaque canal de réception est associé à un satellite SBAS émetteur.

Les signaux SBAS sont envoyés par des fournisseurs de services (en anglais « services providers »), qui possèdent en général plusieurs satellites. Par exemple, on connaît les fournisseurs de services EGNOS ® pour l'Europe et WAAS® pour les Etats-Unis, GAGAN ® pour l'Inde, MSAS® pour le Japon.

Les satellites de chaque fournisseur de service envoient des éphémérides, mais seulement à des fréquences temporelles plus basses que les satellites de géolocalisation.

De plus, chaque fournisseur de services émet des almanachs des satellites de sa constellation.

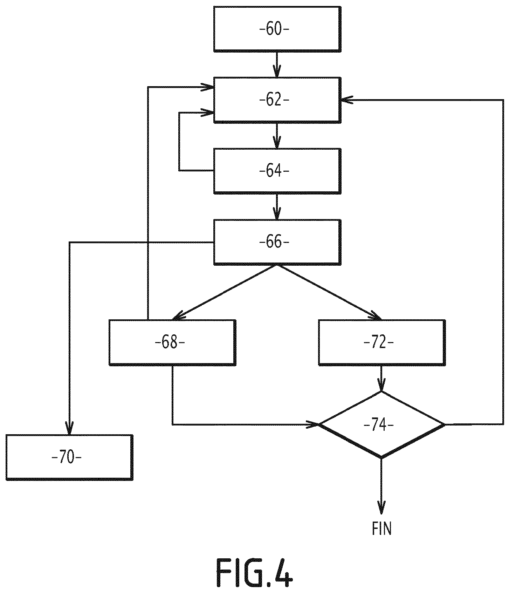

La figure 4 est un synoptique des principales étapes mises en oeuvre dans le troisième mode de réalisation du procédé de validation de synchronisation avec un satellite émetteur Sj d'un système d'augmentation spatiale de type SBAS, mis en oeuvre par un récepteur apte à recevoir des signaux de type SBAS sur plusieurs canaux de réception.

Le procédé de l'invention est adapté à ce cas de figure, dans lequel l'envoi d'éphémérides est groupé et envoyé à faible fréquence (par exemple toutes les 120 secondes pour SBAS).

Dans le système SBAS, chaque mot, sans distinction de type, est constitué de 250 bits et est protégé par un code de protection CRC de 24 bits.

Lors d'une première étape 60, les almanachs des divers fournisseurs de service sont reçus et mémorisés.

Cette étape 60 est mise en oeuvre par tout moyen de communication approprié, par exemple par utilisation d'un autre canal de communication - GSM, Internet ou un autre canal de communication approprié.

L'étape 60 est suivie d'une étape 62 de réception de signaux SBAS après acquisition ou ré-acquisition sur chacun des canaux de réception traités, et d'extraction d'un mot reçu courant ayant un type associé, puis d'une étape 64 de vérification du code CRC du mot reçu.

En cas de vérification négative à l'étape 64, donc s'il y a une possible erreur de réception sur le mot reçu, l'étape 64 est suivie de l'étape 62 précédente de réception et extraction d'un nouveau mot reçu.

En cas de vérification positive à l'étape 64, le mot reçu est mémorisé en relation avec le canal associé pour effectuer ensuite des comparaisons entre mots reçus.

Lors de l'étape de traitement 66, si le mot reçu correspond à la réception du mot éphéméride, alors l'étape 66 est suivie de l'étape 70 décrite ci-après, sinon, le mot reçu sur le canal de réception courant est comparé aux mots reçus de même type sur les autres canaux de réception.

L'étape 70 qui correspond à la réception du mot d'éphéméride consiste en la comparaison des éphémérides avec les données d'almanach préalablement mémorisées pour le fournisseur de services courant.

La comparaison permettra alors de révéler l'existence d'une corrélation croisée.

En cas de comparaison positive à l'étape 66, donc si le mot reçu courant, issu du canal de réception courant, dit premier canal, est identique à un mot reçu d'un deuxième canal, et que le type du mot est différent du type 0 dans le système SBAS où les mots de type 0 ont un contenu fixe, alors l'étape 66 est suivie d'une étape 68.

A l'étape 68 il est vérifié si le premier canal et le deuxième canal sont tous deux associés à des satellites d'un même fournisseur de services, dit fournisseur de services courant.

En cas de réponse positive, l'étape 68 est suivie de l'étape 62.

En cas de réponse négative à l'étape 68, donc si le premier canal et le deuxième canal sont associés à des satellites de fournisseurs de services différents, un compteur d'invalidité $C_{invalid}$ est incrémenté. L'étape 68 est suivie de l'étape 74 décrite ci-après.

Comme dans le deuxième mode de réalisation, le compteur d'invalidité, $C_{invalid}$, est initialisé à 0 à chaque nouvelle mise en oeuvre du procédé de validation de synchronisation.

Si à l'étape 66 le mot reçu courant, issu du canal de réception courant, dit premier canal, est différent des tous les mots de même type reçus des tous les autres canaux, alors le signal est considéré valide et donc non entaché par une corrélation croisée.

Un compteur de validité $C_{valid}$ est incrémenté à l'étape 72, ce compteur étant initialisé à 0 à chaque nouvelle mise en oeuvre du procédé de validation de synchronisation.

L'étape 72 est suivie d'une étape 74 de comparaison du compteur de validité ou, le cas échéant, du compteur d'invalidité, a un nombre de mots reçus à prendre en compte Nr.

Ce nombre Nr dépend des valeurs de la probabilité de non-détection $P_{nd}$ et de la probabilité de fausse alarme $P_{fa}$ d'une corrélation croisée.

Lorsque le nombre Nr est atteint, le procédé de validation de synchronisation pour le signal reçu par le système d'augmentation spatiale sur le canal courant prend fin.

Si le nombre Nr n'est pas atteint, l'étape 74 est suivie de l'étape 62 précédemment décrite pour traitement d'un mot reçu suivant.

Le nombre Nr de mots reçus à prendre en compte est, dans un mode de réalisation, égal à 1.

Pour un mot reçu donné, on peut calculer la probabilité de non-détection et la probabilité de fausse alarme d'une corrélation croisée associées.

En ce qui concerne la probabilité de non-détection, il y a un risque de non détection si un mot est mal décodé. La probabilité de non-détection due à une telle erreur est dépendante du taux d'erreur mot, également appelé WER pour « word error rate », qui dépend du rapport signal à bruit du signal reçu, faussement considéré valide.

Pour un mot SBAS codé sur 250 bits et protégé par un CRC de 24 bits, on a : $P_{nd} < WER \times (1-(1-2^{-24})^{120}) << 7 \cdot 10^{-6}$. L'utilisation d'un seul mot reçu pour confirmer l'absence de corrélation croisée apporte un fort niveau d'intégrité.

Il y a un risque de fausse alarme si deux mots émis par deux satellites de fournisseurs de services différents sont identiques.

La probabilité de fausse alarme, qui est la probabilité de fausse détection d'un phénomène de corrélation croisée, est calculée, selon un mode de réalisation par :

$$P_{fa} < 2^{-218} < 2 \cdot 10^{-66}$$

L'utilisation d'un seul mot pour confirmer la présence de corrélation croisée apporte un faible risque de fausse alarme.

Avantageusement, dans tous les modes de réalisation décrits, la validation ou invalidation de la synchronisation avec un satellite émetteur est accélérée grâce à l'utilisation de mots reçus reçus pour le même satellite émetteur préalablement identifié dans la phase d'acquisition, et, le cas échéant, pour d'autres satellites émetteurs de la constellation qui sont reçus par la récepteur de géolocalisation considéré.

Dans le cas des systèmes d'augmentation spatiale, il s'agit de mots reçus sans distinction de type, alors que pour les systèmes de radionavigation GNSS, il s'agit de mots d'éphémérides.

**Revendications**

1. Procédé de validation de synchronisation d'un récepteur de géolocalisation avec un satellite émetteur lors d'une phase d'acquisition d'un signal de navigation issu de ce satellite,

   ledit récepteur étant apte à recevoir un signal radioélectrique composite comportant une pluralité de signaux de navigation émis chacun par un satellite émetteur faisant partie d'une constellation de satellites, et à mettre en oeuvre une phase d'acquisition de signal de navigation de chacun des satellites émetteurs, dans laquelle le récepteur détermine un satellite émetteur d'un signal de navigation correspondant dans une étape de synchronisation,
   chaque satellite émetteur transmettant en outre des ensembles d'éphémérides composées d'une pluralité de mots, chacun ayant un rang associé, codant des informations relatives audit satellite émetteur et permettant de calculer une position dudit satellite émetteur dans un référentiel donné, le procédé étant mis en oeuvre par ledit récepteur, où le procédé comporte :

   - pour chaque satellite émetteur identifié, mise en oeuvre d'un test de validation, comprenant :

     - l'extraction (26, 42) de mots d'éphéméride du signal de navigation associé au satellite émetteur identifié dans la phase d'acquisition, au fur et à mesure de la réception dudit signal de navigation,
     - la comparaison (30, 50) d'au moins une partie desdits mots d'éphéméride extraits à au moins un mot d'éphéméride de même rang mémorisé pour ledit satellite émetteur identifié et/ou pour au moins un autre des satellites émetteurs, et,

   en fonction du résultat de la comparaison, vérification d'une condition de validation (32-34, 52-56) de la synchronisation avec ledit satellite émetteur identifié, avec une probabilité de fausse alarme et/ou une probabilité de non-détection prédéterminée,
la fausse alarme désignant une fausse détection de corrélation croisée,
la non-détection désignant une non détection de corrélation croisée, la probabilité de non détection étant estimée en fonction de

la probabilité qu'au moins un mot d'éphéméride de même rang soit identique dans les éphémérides transmises par deux ou plus de satellites distincts ou
la probabilité qu'un mot d'éphéméride reçu pour ledit satellite émetteur soit égal à un mot reçu pour un autre satellite,
et

- en cas de vérification positive, arrêt du test de validation,
- en cas de vérification négative, retour à l'étape d'extraction.

2. Procédé selon la revendication 1, **caractérisé en ce qu'**il comporte, après l'étape d'extraction, une étape de vérification (28, 44) d'un code de protection associé à un ou plusieurs desdits mots d'éphéméride extraits, et **en ce que** la comparaison (30, 50) est effectuée sur les mots d'éphéméride extraits pour lesquels la vérification est positive.

3. Procédé selon l'une des revendications 1 ou 2, **caractérisé en ce qu'**il comporte une étape préalable d'estimation (20, 22) d'une probabilité, pour chaque mot d'éphéméride de l'ensemble d'éphémérides, qu'un mot d'éphéméride, ayant un rang associé et émis par un satellite émetteur donné, ait une même valeur qu'un mot d'éphéméride émis de même rang émis par un autre satellite de la constellation de satellites.

4. Procédé selon la revendication 3, **caractérisé en ce qu'**il comporte un calcul (22) d'ensembles de rangs de mots d'éphémérides, chaque dit ensemble de rangs comportant des rangs de mots d'éphémérides permettant une validation du satellite émetteur associé avec une probabilité de non-détection correspondante, et une mémorisation (22) d'au moins un ensemble d'ensembles de rangs d'éphémérides calculés correspondant à la probabilité de non-détection prédéterminée.

5. Procédé selon la revendication 4, **caractérisé en ce qu'**il comporte, en cas de comparaison positive d'un mot d'éphéméride reçu avec un mot d'éphéméride préalablement validé et mémorisé pour ledit satellite émetteur, une validation (34) en fonction de l'appartenance du rang dudit mot d'éphéméride reçu à au moins un desdits ensembles de rangs d'éphémérides calculés.

6. Procédé selon l'une des revendications 1 ou 2, **caractérisé en ce qu'**il comporte une comparaison (50) d'un mot d'éphéméride extrait avec un mot d'éphéméride de même rang mémorisé pour ledit satellite émetteur identifié, et avec un mot d'éphéméride de même rang reçu pour chacun d'une pluralité d'autres satellites émetteurs.

7. Procédé selon la revendication 6, **caractérisé en ce que** :

- si le mot d'éphéméride extrait est identique au mot d'éphéméride de même rang mémorisé pour ledit satellite émetteur identifié, et différent de chacun des mots d'éphéméride de même rang reçus pour un autre satellite émetteur, un compteur de validité est incrémenté (54), ou
- si le mot d'éphéméride extrait est différent du mot d'éphéméride de même rang mémorisé pour ledit satellite identifié, et identique à au moins un des mots d'éphéméride de même rang reçus pour un autre satellite émetteur, un compteur d'invalidité est incrémenté (54).

8. Procédé selon la revendication 7, **caractérisé en ce qu'**une validation ou invalidation de la synchronisation est effectuée en fonction de la comparaison (56) du compteur de validité ou du compteur d'invalidité à un nombre de comparaisons à prendre en considération, ledit nombre de comparaisons à prendre en considération étant dépendant de la probabilité de fausse alarme et/ou de la probabilité de non-détection prédéterminées.

9. Récepteur de géolocalisation mettant en oeuvre une synchronisation avec un satellite émetteur lors d'une phase d'acquisition d'un signal de navigation issu de ce satellite, ledit récepteur étant apte à recevoir un signal radioélectrique composite comportant une pluralité de signaux de navigation émis chacun par un satellite émetteur faisant partie d'une constellation de satellites, et à mettre en oeuvre une phase d'acquisition de signal de navigation de chacun des satellites émetteurs, dans laquelle le récepteur détermine un satellite émetteur d'un signal de navigation correspondant dans une étape de synchronisation,

chaque satellite émetteur transmettant en outre des ensembles d'éphémérides composées d'une pluralité de mots, chacun ayant un rang associé, codant des informations relatives audit satellite émetteur et permettant de calculer une position dudit satellite émetteur dans un référentiel donné,

où le récepteur comporte des modules de mise en oeuvre d'un test de validation pour chaque satellite émetteur identifié, comprenant :

- un module d'extraction de mots d'éphéméride du signal de navigation associé au satellite émetteur identifié dans la phase d'acquisition, au fur et à mesure de la réception dudit signal de navigation,
- un module de comparaison d'au moins une partie desdits mots d'éphéméride extraits à au moins un mot d'éphéméride de même rang mémorisé pour ledit satellite émetteur identifié et/ou pour au moins un autre des satellites émetteurs, et
- un module de validation de la synchronisation avec ledit satellite émetteur identifié,

mettant en oeuvre, en fonction du résultat de la comparaison, une vérification d'une condition de validation de la synchronisation avec ledit satellite émetteur identifié avec une probabilité de fausse alarme et/ou une probabilité de non-détection prédéterminée,

la non-détection désignant une non détection de corrélation croisée, la probabilité de non détection étant estimée en fonction de

la probabilité qu'au moins un mot d'éphéméride de même rang soit identique dans les éphémérides transmises par deux ou plus de satellites distincts ou

la probabilité qu'un mot d'éphéméride reçu pour ledit satellite émetteur soit égal à un mot reçu pour un autre satellite,

la fausse alarme désignant une fausse détection de corrélation croisée, et le récepteur étant configuré,

- en cas de vérification positive, pour arrêter du test de validation,
- en cas de vérification négative, pour extraire de mots d'éphéméride du signal de navigation associé au satellite émetteur identifié dans la phase d'acquisition, au fur et à mesure de la réception dudit signal de navigation.

## Patentansprüche

1. Synchronisationsvalidierungsverfahren eines Geolokalisierungsempfängers mit einem Sendesatelliten während einer Erfassungsphase eines Navigationssignals, das von diesem Satelliten stammt,

wobei der Empfänger geeignet ist, um ein zusammengesetztes Funksignal zu empfangen, umfassend eine Vielzahl von Navigationssignalen, die jeweils von einem Sendesatelliten gesendet werden, der Teil einer Satellitenkonstellation ist, und um eine Erfassungsphase des Navigationssignals von jedem der Sendesatelliten zu implementieren, in der der Empfänger einen Sendesatelliten eines entsprechenden Navigationssignals in einem Synchronisationsschritt bestimmt,

wobei jeder Sendesatellit ferner Ephemeriden-Einheiten sendet, die aus einer Vielzahl von Wörtern bestehen, mit denen jeweils ein Rang assoziiert ist, Informationen über den genannten Sendesatelliten kodieren und es ermöglichen, eine Position des Sendesatelliten in einem gegebenen Bezugssystem zu berechnen, wobei das Verfahren von dem Empfänger implementiert wird,

wobei das Verfahren Folgendes umfasst:

- für jeden identifizierten Sendersatelliten, Implementieren eines Validierungstests, umfassend:

- Extrahieren (26, 42) von Ephemeriden-Wörtern aus dem Navigationssignal, das mit dem in der Erfassungsphase identifizierten Sendesatelliten assoziiert ist, im Zuge des Empfangs des Navigationssignals,
- Vergleichen (30, 50) mindestens eines Teils der extrahierten Ephemeriden-Wörter mit mindestens einem Ephemeriden-Wort desselben Rangs, das für den identifizierten Sendersatelliten und/oder für mindestens einen anderen der Sendersatelliten gespeichert ist, und

abhängig von dem Resultat des Vergleichs, Überprüfen einer Validierungsbedingung (32-34, 52-56) der Synchronisation mit dem identifizierten Sendesatelliten mit einer vorbestimmten Fehlalarmwahrscheinlichkeit und/oder einer vorbestimmten Nichterkennungswahrscheinlichkeit,

wobei der Fehlalarm eine falsche Kreuzkorrelationserkennung bezeichnet,

wobei die Nichterkennung eine Nichterkennung der Kreuzkorrelation bezeichnet, wobei die Wahrscheinlichkeit der Nichterkennung geschätzt wird abhängig von

der Wahrscheinlichkeit, dass mindestens ein gleichrangiges Ephemeriden-Wort in den Ephemeriden, die von zwei oder mehr verschiedenen Satelliten übertragen werden, identisch ist, oder

der Wahrscheinlichkeit, dass ein für den Sendesatelliten empfangenes Ephemeriden-Wort gleich wie ein Wort ist, das für einen anderen Satelliten empfangen wird,

und

- den Validierungstest im Fall einer positiven Verifizierung zu beenden,
- bei negativer Verifizierung zurück zu dem Extraktionsschritt.

2. Verfahren nach Anspruch 1, **dadurch gekennzeichnet, dass** es nach dem Extraktionsschritt einen Schritt einer Verifizierung (28, 44) eines Schutzcodes umfasst, der mit einem oder mehreren der extrahierten Ephemeriden-Wörter assoziiert ist, und dass der Vergleich (30, 50) an den extrahierten Ephemeriden-Wörtern durchgeführt wird, für die die Verifizierung positiv ist.

3. Verfahren nach einem der Ansprüche 1 oder 2, **dadurch gekennzeichnet, dass** es einen vorherigen Schritt eines Schätzens (20, 22) einer Wahrscheinlichkeit für jedes Ephemeriden-Wort der Einheit von Ephemeriden umfasst, dass ein Ephemeriden-Wort, mit dem ein Rang assoziiert ist, und von einem gegebenen Sendesatelliten gesendet wird, den gleichen Wert aufweist wie ein gesendetes Ephemeriden-Wort mit dem gleichen Rang, das von einem anderen Satelliten der Satellitenkonstellation gesendet wird.

4. Verfahren nach Anspruch 3, **dadurch gekennzeichnet, dass** es eine Berechnung (22) von Einheiten von Ephemeriden-Worträngen umfasst, jede Einheit von Rängen umfassend Ephemeriden-Worträge, die eine Validierung des assoziierten Sendesatelliten mit einer entsprechenden NichtErkennungswahrscheinlichkeit ermöglichen, und Speichern (22) mindestens einer Einheit von berechneten Ephemeriden-Rangeinheiten, die der vorbestimmten NichtErkennungswahrscheinlichkeit entsprechen.

5. Verfahren nach Anspruch 4, **dadurch gekennzeichnet, dass** es im Fall eines positiven Vergleichs eines empfangenen Ephemeriden-Worts mit einem zuvor validierten und gespeicherten Ephemeriden-Wort für den Sendesatelliten eine Validierung (34) abhängig von der Zugehörigkeit des Rangs des empfangenen Ephemeriden-Worts zu mindestens einer der Einheiten von berechneten Ephemeriden-Rängen umfasst.

6. Verfahren nach einem der Ansprüche 1 oder 2, **dadurch gekennzeichnet, dass** es einen Vergleich (50) eines extrahierten Ephemeriden-Worts mit einem Ephemeridenwort desselben Rangs, das für den identifizierten Sendersatelliten gespeichert ist, und mit einem Ephemeriden-Wort desselben Rangs, das für jeden einer Vielzahl anderer Sendersatelliten empfangen wird, umfasst.

7. Verfahren nach Anspruch 6, **dadurch gekennzeichnet, dass**

- wenn das extrahierte Ephemeridenwort mit dem gleichrangigen Ephemeriden-Wort identisch ist, das für den identifizierten Sendesatelliten gespeichert ist, und sich von jedem der gleichrangigen Ephemeriden-Wörter unterscheidet, die für einen anderen sendenden Satelliten empfangen wurden, wird ein Gültigkeitszähler inkrementiert (54), oder
- wenn das extrahierte Ephemeriden-Wort sich von dem gleichrangigen Ephemeriden-Wort unterscheidet, das für den identifizierten Satelliten gespeichert ist, und identisch ist mit mindestens eines der gleichrangigen Ephemeriden-Wörter, die für einen anderen Sendesatelliten empfangen werden, ein Ungültigkeitszähler inkrementiert (54) wird.

8. Verfahren nach Anspruch 7, **dadurch gekennzeichnet, dass** eine Validierung oder Annullierung der Synchronisation abhängig von dem Vergleich (56) des Gültigkeitszählers oder des Ungültigkeitszählers mit einer Anzahl von zu berücksichtigenden Vergleichen durchgeführt wird, wobei die Anzahl der zu berücksichtigenden Vergleiche von der vorbestimmten Wahrscheinlichkeit eines Fehlalarms und/oder der vorbestimmten Nichterkennungswahrscheinlichkeit abhängt.

**9.** Geolokalisierungsempfänger, der eine Synchronisation mit einem Sendesatelliten während einer Erfassungsphase eines von diesem Satelliten stammenden Navigationssignals implementiert, wobei der Empfänger geeignet ist, um ein zusammengesetztes Funksignal zu empfangen, umfassend eine Vielzahl von Navigationssignalen, die jeweils von einem Sendesatelliten gesendet werden, der Teil einer Satellitenkonstellation ist, und um eine Erfassungsphase des Navigationssignals von jedem der Sendesatelliten zu implementieren, in der der Empfänger einen Sendesatelliten eines entsprechenden Navigationssignals in einem Synchronisationsschritt bestimmt,

wobei jeder Sendesatellit ferner Ephemeriden-Einheiten sendet, die aus einer Vielzahl von Wörtern bestehen, mit denen jeweils ein Rang assoziiert ist, Informationen über den genannten Sendesatelliten kodieren und es ermöglichen, eine Position des Sendesatelliten in einem gegebenen Bezugssystem zu berechnen,
wobei der Empfänger
Module zur Implementierung eines Validierungstests für jeden identifizierten Sendesatelliten umfasst, umfassend:

- ein Modul zum Extrahieren von Ephemeriden-Wörtern aus dem Navigationssignal, das mit dem in der Erfassungsphase identifizierten Sendesatelliten assoziiert ist, im Zuge des Empfangs des Navigationssignals,
- ein Modul zum Vergleichen von mindestens einem Teil der extrahierten Ephemeriden-Wörter mit mindestens einem Ephemeriden-Wort desselben Rangs, das für den identifizierten Sendersatelliten und/oder für mindestens einen anderen der Sendersatelliten gespeichert ist, und
- ein Modul zum Validieren der Synchronisation mit dem identifizierten Sendesatelliten,

Implementieren, abhängig von dem Resultat des Vergleichs, einer Überprüfung einer Validierungsbedingung der Synchronisation mit dem identifizierten Sendesatelliten mit einer vorbestimmten Fehlalarmwahrscheinlichkeit und/oder einer vorbestimmten Nichterkennungswahrscheinlichkeit,
wobei die Nichterkennung eine Nichterkennung der Kreuzkorrelation bezeichnet, wobei die Wahrscheinlichkeit der Nichterkennung geschätzt wird abhängig von

der Wahrscheinlichkeit, dass mindestens ein gleichrangiges Ephemeriden-Wort in den Ephemeriden, die von zwei oder mehr verschiedenen Satelliten übertragen werden, identisch ist, oder
der Wahrscheinlichkeit, dass ein für den Sendesatelliten empfangenes Ephemeriden-Wort gleich wie ein Wort ist, das für einen anderen Satelliten empfangen wird,

wobei der Fehlalarm eine falsche Kreuzkorrelationserkennung bezeichnet, und der Empfänger konfiguriert ist, um

- den Validierungstest im Fall einer positiven Verifizierung zu beenden,
- im Fall einer negativen Verifizierung, Ephemeriden-Wörter des Navigationssignals zu extrahieren, das mit dem in der Erfassungsphase identifizierten Sendesatelliten assoziiert ist, und zwar in dem Maße, im Zuge des Empfangs des Navigationssignals.

**Claims**

**1.** A method for validating the synchronization between a geolocation receiver and a transmitting satellite during a phase for acquiring a navigation signal from this satellite,

said receiver being able to receive a composite radio signal including a plurality of navigation signals each transmitted by a transmitting satellite that is part of a satellite constellation, and to implement a phase for acquiring a navigation signal for each of the transmitting satellites, in which the receiver determines a satellite transmitting a corresponding navigation signal in a synchronization step,
each transmitting satellite further transmitting sets of ephemerids made up of a plurality of words, each having an associated rank, encoding information relative to said transmitting satellite and making it possible to compute the position of said transmitting satellite in a given plane of reference, the method being implemented by said receiver,
wherein the method comprises :
for each identified transmitting satellite, performing a validation test, comprising:

- extracting (26, 42) ephemerid words from the navigation signal associated with the transmitting satellite identified in the acquisition phase, as said navigation signal is received,
- comparing (30, 50) at least part of said extracted ephemerid words to at least one stored ephemerid word with the same rank for said identified transmitting satellite and/or for at least one of the other transmitting satellites, and

based on the result of the comparison,
verifying a synchronization validation condition (32-34, 52-56) validating the synchronization with said identified transmitting satellite, with a predetermined false alarm probability and/or non-detection probability,
the false alarm designating a false detection of a cross-correlation,
the non-detection designating a non-detection of cross-correlation, the probability of non-detection being estimated as a function of

the probability that at least one ephemerid word of same rank is identical in the ephemerids transmitted for two or more distinct satellites, or
the probability that said ephemerid word received by said transmitting satellite is identical to a word received for another satellite, and

in case of positive verification, stop the validation test,
in case of negative verification, return to the extracting step.

2. The method according to claim 1, **characterized in that** it comprises, after the extraction step, a step for verifying (28, 44) a protection code associated with one or several of said extracted ephemerid words, and wherein the comparison (30, 50) is done on the extracted ephemerid words for which the verification is positive.

3. The method according to one of claims 1 or 2, **characterized in that** it comprises a prior step for estimating (20, 22) a probability, for each ephemerid word of the set of ephemerids, that an ephemerid word, having an associated rank and transmitted by a given transmitting satellite, has a same value as a transmitted ephemerid word with the same rank transmitted by another satellite in the satellite constellation.

4. The method according to claim 3, **characterized in that** it further comprising computing (22) sets of ranks of ephemerid words, each said set of ranks including ephemerid word ranks allowing validation of the associated transmitting satellite with a corresponding non-detection probability, and storing (22) at least one set of computed ephemerid rank sets corresponding to a predetermined non-detection probability.

5. The method according to claim 4, **characterized in that** it comprises, in case of positive comparison of a received ephemerid word with an ephemerid word previously validated and stored for said transmitting satellite, a validation (34) based on whether the rank of said received ephemerid word belongs to at least one of said computed sets of ephemerid ranks.

6. The method according to one of claim 1 or 2, **characterized in that** it further comprises comparing (50) an extracted ephemerid word with a stored ephemerid word having the same rank for said identified transmitting satellite, and with an ephemerid word of the same rank received for each of the plurality of other transmitting satellites.

7. The method according to claim 6, **characterized in that** it :

- if the extracted ephemerid word is identical to the stored ephemerid word having the same rank for said identified transmitting satellite, and different from each of the ephemerid words having the same rank received for another transmitting satellite, a validity counter is incremented (54), or
- if the extracted ephemerid word is different from the stored ephemerid word having the same rank for said identified satellite, and identical to at least one of the words having the same rank received for another transmitting satellite, an invalidity counter is incremented (54).

8. The method according to claim 7, wherein a validation or invalidation of the synchronization is done based on the comparison (56) of the validity counter or invalidity counter to a number of comparisons to be taken into consideration, said number of comparisons to be taken into consideration depending on the predetermined false alarm probability and/or non-detection probability.

9. A geolocation receiver performing a synchronization and a transmitting satellite during a phase for acquiring a navigation signal from this satellite, said receiver being able to receive a composite radio signal including a plurality of navigation signals each transmitted by a transmitting satellite that is part of a satellite constellation, and to implement a phase for acquiring a navigation signal for each of the transmitting satellites, in which the receiver determines a satellite transmitting a corresponding navigation signal in a synchronization step,

each transmitting satellite further transmitting sets of ephemerids made up of a plurality of words, each having an associated rank, encoding information relative to said transmitting satellite and making it possible to compute the position of said transmitting satellite in a given plane of reference,
wherein the receiver comprises
modules for performing a validation test for each identified transmitting satellite, comprising:

- a module for extracting ephemerid words from the navigation signal associated with the transmitting satellite identified in the acquisition phase, as said navigation signal is received.
- a module for comparing at least part of said extracted ephemerid words to at least one stored ephemerid word with the same rank for said identified transmitting satellite and/or for at least one of the other transmitting satellites, and
- a module for validating or not validating the synchronization with said identified transmitting satellite,

implementing, based on the result of the comparison, verifying a synchronization validation condition validating the synchronization with said identified transmitting satellite, with a predetermined false alarm probability and/or non-detection probability,
the false alarm designating a false detection of a cross-correlation,
the non-detection designating a non-detection of cross-correlation, the probability of non-detection being estimated as a function of

the probability that at least one ephemerid word of same rank is identical in the ephemerids transmitted for two or more distinct satellites, or
the probability that said ephemerid word received by said transmitting satellite is identical to a word received for another satellite, and

the receiver being configured :

in case of positive verification, for stopping the validation test,
in case of negative verification, for extracting ephemerid words from the navigation signal associated with the transmitting satellite identified in the acquisition phase, as said navigation signal is received.

FIG.1

FIG.2

40

-42-

-44-

-46-

-48-

-50-

-52-

-54-

-56- Non

Oui

FIN

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015009065 A1
- US 2012134392 A1
- JP H11118900 A